(19) Europäisches Patentamt
European Patent Office
Office européen des brevets

(11) **EP 3 780 166 A1**

(12) **EUROPEAN PATENT APPLICATION**
published in accordance with Art. 153(4) EPC

(43) Date of publication:
**17.02.2021 Bulletin 2021/07**

(51) Int Cl.:
*H01M 4/131* (2010.01)  *H01M 4/505* (2010.01)
*H01M 4/525* (2010.01)  *H01M 4/62* (2006.01)

(21) Application number: **18913695.5**

(22) Date of filing: **02.04.2018**

(86) International application number:
**PCT/JP2018/014146**

(87) International publication number:
**WO 2019/193635 (10.10.2019 Gazette 2019/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **KABUSHIKI KAISHA TOSHIBA
Minato-ku
Tokyo 105-8001 (JP)**

(72) Inventors:
• **KANO, Tetsuro**
  **Kawasaki-shi, Kanagawa 212-8585 (JP)**
• **WATANABE, Yuki**
  **Kawasaki-shi, Kanagawa 212-8585 (JP)**
• **NAMBA, Kazuhiro**
  **Kawasaki-shi, Kanagawa 212-8585 (JP)**
• **WATANABE, Hidetoshi**
  **Kawasaki-shi, Kanagawa 212-8585 (JP)**
• **HOSHINA, Keigo**
  **Kawasaki-shi, Kanagawa 212-8585 (JP)**

(74) Representative: **Hoffmann Eitle
Patent- und Rechtsanwälte PartmbB
Arabellastraße 30
81925 München (DE)**

(54) **ELECTRODE, NON-AQUEOUS ELECTROLYTE BATTERY, AND BATTERY PACK**

(57) According to one embodiment, an electrode is provided. The electrode includes an active-material containing layer that includes active material particles and a binder containing a polymer that contains monomers containing nitrogen atoms. The particle size distribution chart of the electrode obtained by the laser diffraction scattering has peak A and peak B whose particle sizes corresponding to their peak tops are different from each other. The particle size DA corresponding to the peak top of the peak A is smaller than the particle size DB corresponding to the peak top of the peak B. The ratio PA/PB of the frequency PA of the peak top of the peak A and the frequency PB of the peak top of the peak B falls within the range of 0.2 or larger and 1.5 or smaller.

F I G. 6

EP 3 780 166 A1

**Description**

Technical Field

Embodiments described herein relate generally to an electrode, a nonaqueous electrolyte battery, and a battery pack.

Background Art

Lithium ion secondary batteries are widely used in mobile devices, automobiles, storage batteries, and the like. Lithium ion secondary batteries are power storage devices, whose market size promises to expand.

A lithium ion secondary battery includes electrodes including a positive electrode and a negative electrode, and an electrolyte. An electrode of the lithium ion secondary battery includes a current collector and an active-material containing layer provided on the main surface of this current collector. The active-material containing layer of the electrode may be a layer formed of active material particles, a conductive material, and a binder, and has a porous body capable of holding an electrolyte.

Through a repetition of charging and discharging of a lithium ion secondary battery, a side reaction may occur between the active material particles and the electrolyte. In the side reaction, a gas may be generated, and a compound generated due to the side reaction may coat the active material particles and excessively increase the resistance. This may increase the reaction resistance of the lithium ion secondary battery, degrading its input/output performance.

CITATION LIST

[Patent Literature]

[Patent Document 1] Japanese Patent No. 6003889
[Patent Document 2] Japanese Patent No. 6083609
[Patent Document 3] Jpn. Pat. Appln. KOKAI Publication No. 2012-164624

Summary of the Invention

TECHNICAL PROBLEM

The present invention has been made in view of the above circumstances . The object of the present invention is to provide an electrode that realizes excellent input/output performance and cycle life characteristics, as well as a nonaqueous electrolyte battery and a battery pack that include such an electrode.

SOLUTION TO PROBLEM

According to an embodiment, an electrode is provided. The electrode includes an active-material containing layer that includes active material particles and a binder containing a polymer that contains monomers containing nitrogen atoms. The active material particles contain at least one selected from the group consisting of a lithium-containing nickel cobalt manganese composite oxide, a lithium-containing cobalt oxide, and a lithium-containing manganese oxide. The particle size distribution chart of the electrode obtained by the laser diffraction scattering has peak A and peak B whose particle sizes corresponding to their peak tops are different from each other. The particle size DA corresponding to the peak top of the peak A is smaller than the particle size DB corresponding to the peak top of the peak B. The ratio PA/PB of the frequency PA of the peak top of the peak A and the frequency PB of the peak top of the peak B falls within the range of 0.2 or larger and 1.5 or smaller.

According to another embodiment, a nonaqueous electrolyte battery is provided. The nonaqueous electrolyte battery includes a positive electrode as the electrode according to the embodiment, a negative electrode, and an electrolyte.

According to another embodiment, a battery pack is provided. The battery pack includes the nonaqueous electrolyte battery according to the embodiment.

Brief Description of Drawings

FIG. 1 is a partially cutaway perspective view showing an exemplary nonaqueous electrolyte battery according to a second embodiment.
FIG. 2 is an enlarged cross sectional view of portion A of the nonaqueous electrolyte battery illustrated in FIG. 1.
FIG. 3 is a partially cutaway perspective view showing another exemplary nonaqueous electrolyte battery according to the second embodiment.
FIG. 4 is an exploded perspective view of an exemplary battery pack according to a third embodiment.
FIG. 5 is a block diagram showing an exemplary electric circuit of the battery pack illustrated in FIG. 4.
FIG. 6 is a chart indicating a particle size distribution of Example 1.

Modes for Carrying Out the Invention Embodiments will be explained below with reference to the drawings. The same symbols are used for components that are common among the embodiments, and repetitions of explanations are omitted. Furthermore, the drawings intend to provide typical views for explaining the embodiments and facilitating understanding of the embodiments. The structural design may be suitably modified by referring to the following description and the known technologies so that the illustration may differ in shape, dimension and ratio from an actual device.

(First Embodiment)

According to a first embodiment, an electrode is provided. The electrode includes an active-material containing layer that includes active material particles and a binder containing a polymer that contains monomers containing nitrogen atoms. The active material particles contain at least one selected from the group consisting of a lithium-containing nickel cobalt manganese composite oxide, a lithium-containing cobalt oxide, and a lithium-containing manganese oxide. The particle size distribution chart of the electrode obtained by the laser diffraction scattering has peak A and peak B whose particle sizes corresponding to their peak tops are different from each other. The particle size DA corresponding to the peak top of the peak A is smaller than the particle size DB corresponding to the peak top of the peak B. The ratio PA/PB of the frequency PA of the peak top of the peak A and the frequency PB of the peak top of the peak B falls within the range of 0.2 or larger and 1.5 or smaller.

In accordance with the charging and discharging, side reactions progress and the crystal structure of the active material is degraded at the surfaces of the active material particles, as a result of which the resistance associated with the oxidation-reduction reaction of lithium ions increases. In order to improve the life characteristics and suppress the increase in the resistance, it is effective to coat the surface of the active material particles with molecules of the binder so as to control the reactivity of the surface of the active material particles and protect the crystal structure of the surface of the active material particles.

When coating the surface of active material particles with the binder molecules, however, an issue of an increase in the initial resistance may be raised. In particular, when polymers containing nitrogen atoms as a constituent element are adopted for the binder, the major part of the surface of the active material particles is coated. This may largely suppress a long-term increase in the resistance, but may increase the initial resistance, and lower the input/output performance.

The present inventors have discovered that in an electrode including an active-material containing layer that contains a binder, which contains polymers containing monomers containing nitrogen atoms, the particle size distribution of the active-material containing layer (electrode) should be suitably controlled so that an increase in the initial resistance can be suppressed and an increase in the resistance in long-term use can also be suppressed.

The binder that contains a polymer material containing nitrogen atoms (N) exhibits an enhanced binding property among the active material particles and also an enhanced binding property between the active material and the conductive material. When the electrode includes a current collector, the binding property between the active-material containing layer and the current collector can also be enhanced. In addition, when the binder contains a polymer material that contains nitrogen atoms, this polymer material serves as a coating film, covering the surface of the active material. The polymer material containing nitrogen atoms, which exhibits relatively high polarity in the molecules, is likely to interact with the surface of an oxide . For instance, a polymer material containing nitrogen atoms is likely to interact with at least one selected from the group consisting of a lithium-containing nickel cobalt manganese composite oxide, a lithium-containing cobalt oxide and a lithium-containing manganese oxide. Since the polymer material containing nitrogen atoms demonstrates a high affinity with the surface of the active material particles containing at least one selected from these oxides, the surface of the active material particles can be uniformly covered with the polymer material that serves as a coating film. With the surface of the active material particles coated with the polymer material containing nitrogen atoms, the reactivity between the surface of the active material and the electrolyte can be reduced. Thus, side reactions such as oxidative decomposition of the electrolyte solvent and/or electrolyte salt can be suppressed.

As a result, excessive growth of the coating film, which becomes a possible resistance component, can be suppressed, thereby suppressing an increase in the resistance of the battery. Furthermore, with the surfaces of the active material particles coated and protected by the coating film, irreversible changes in the crystal structure that tend to occur during an oxidation-reduction reaction of lithium ions can be suppressed. Thus, deterioration of the entire active material can be suppressed, and a decrease in the capacity of the battery can also be suppressed.

On the other hand, the coating film formed of the binder may become a reaction resistance in the oxidation-reduction reaction of lithium ions. The charge/discharge reaction tends to be inhibited particularly at low temperatures and in a high rate range, as a result of which the low-temperature characteristics and the input/output performance tend to be lowered.

In the electrode according to the present embodiment, the particle size of the particles constituting the active-material containing layer is adjusted to control the specific surface area of the constituent particles, or in other words the reaction area. In this manner, an electrode which can realize a battery with excellent low-temperature characteristics and input/output performance, with increase in the reaction resistance suppressed, can be obtained.

Specifically, a particle size distribution chart of such an electrode (active-material containing layer) obtained by the laser diffraction scattering satisfies the following conditions: The particle size distribution chart of the electrode has a peak A and a peak B whose particle sizes corresponding to their peak tops are different each other; the particle size DA corresponding to the peak top of the peak A is smaller than a particle size DB corresponding to the peak top of the peak B; and the ratio PA/PB of the frequency PA of the peak top of the peak A and the frequency PB of the peak top of the peak B falls within the range of 0.2 or larger and 1.5 or smaller. When the particle size distribution chart of the electrode satisfies the above conditions, an electrode can be provided which can realize a nonaqueous electrolyte battery that suppresses an increase in the reaction resistance and exhibits excellent input/output performance and cycle life characteristics.

The electrode according to the first embodiment will be described in detail below.

The electrode according to the first embodiment may include a current collector. That is, the electrode according to the first embodiment may include a current collector and an active-material containing layer formed on the main surfaces of the current collector. The active-material containing layer may be formed on one of the main surfaces or both of the main surfaces of the current collector.

The current collector may include a portion that does not bear the active-material containing layer thereon. Such a portion can serve as an electrode tab. Alternatively, the electrode may include an electrode tab separately from the current collector.

As the current collector, a sheet containing a material of a high electrical conductivity may be adopted. For example, an aluminum foil or aluminum alloy foil may be used as the current collector. If an aluminum foil or aluminum alloy foil is used, its thickness may be preferably 20 $\mu$m or less. The aluminum alloy foil may contain magnesium, zinc, silicon, and the like. Furthermore, the aluminum alloy foil may contain a transition metal. The content of the transition metal in the aluminum alloy foil may be preferably 1% or less by mass. Examples of the transition metal include iron, copper, nickel, and chromium.

The active-material containing layer contains active material particles and a binder. The binder includes polymers that contain monomers containing nitrogen atoms. The active-material containing layer may further contain a conductive material.

The active material particles contain at least one selected from the group consisting of a lithium-containing nickel cobalt manganese composite oxide, a lithium-containing cobalt oxide, and a lithium-containing manganese oxide. The active-material containing layer may contain, as an active material, at least one selected from the group consisting of a lithium-containing nickel cobalt manganese composite oxide, a lithium-containing cobalt oxide, and a lithium-containing manganese oxide.

A lithium-containing nickel cobalt manganese composite oxide may be represented by the general formula $Li_{1-x}Ni_{1-a-b}Co_aMn_bO_2$. In this general formula, x is in the range of $-0.2 \leq x \leq 0.5$, a is in the range of $0 < a \leq 0.4$, and b is in the range of $0 < b \leq 0.4$. The value x may vary as the lithium-containing nickel cobalt manganese composite oxide inserts and extracts lithium ions. That is, as the charging progresses and lithium ions are extracted from the lithium-containing nickel cobalt manganese composite oxide, the value x tends to increase. On the other hand, as the discharging progresses and lithium ions are inserted into the lithium-containing nickel cobalt manganese composite oxide, x tends to decrease. In the general formula, with the value a satisfies 0.4 or less, the thermal stability of the active material can be improved. With the value b satisfies 0.4 or less, the discharge capacity can be increased.

Examples of lithium-containing cobalt oxides include $Li_xCoO_2$, where $0 < x \leq 1$.

Examples of lithium-containing manganese oxides include $Li_xMn_2O_4$ and $Li_xMnO_2$, where $0 < x \leq 1$.

Other active materials may be mixed and used as the active material. Examples of such other active materials include lithium nickel composite oxides (e.g., $LiNiO_2$), lithium nickel cobalt composite oxides (e.g., $LiNi_{1-x}Co_xO_2$, $0 < x < 1$), lithium manganese cobalt composite oxides (e.g., $LiMn_xCo_{1-x}O_2$, $0 < x < 1$), and lithium iron phosphate ($LiFePO_4$) having

an olivine structure.

If a mixture of at least one selected from the group consisting of a lithium-containing nickel cobalt manganese composite oxide, a lithium-containing cobalt oxide, and a lithium-containing manganese oxide with another active material is used as the active material, the ratio of at least one active material selected from the group consisting of a lithium-containing nickel cobalt manganese composite oxide, a lithium-containing cobalt oxide, and a lithium-containing manganese oxide in the mixture is preferably 50% or more by mass .

The active material particles may be a mixture of primary particles and secondary particles. A secondary particle is an aggregate of primary particles. The secondary particle is preferably formed with densely packed primary particles. A cavity created inside the secondary particle tends to lower the electrode density.

The average particle size of the active material particles may be 3.0 $\mu$m or larger and 9.0 $\mu$m or smaller, and preferably 4.5 $\mu$m or larger and 7.5 $\mu$m or smaller. With the average particle size of the active material particles being within this range, an abundance ratio of the secondary particles and the primary particles that is suitable for reducing the initial resistance of the battery can be attained when some of the secondary particles are broken up due to dispersion.

The conductive material may be adopted as needed so as to improve the current collecting performance. Examples of the conductive material include acetylene black, carbon black, graphite, carbon fiber, and graphene. A single material or two or more materials may be adopted as the conductive material.

The binder (binding agent) of the active-material containing layer is mixed in to fill gaps between the dispersed particles of the active material and also to bind the active material with the current collector. The binder includes polymer that contain monomers containing nitrogen atoms. The binder may be composed of only polymer that contain monomers containing nitrogen atoms. The polymer may be a polymer or a copolymer containing a monomer including nitrogen atoms.

A polymer contained in the binder preferably contains nitrogen-atom containing monomers at a ratio of 70 mol% to 100 mol%. If the ratio of the nitrogen-atom containing monomers in the copolymerization component is extremely low, sufficient binding performance may not be achieved. Such a ratio is unfavorable, significantly deteriorating the resistance and capacity of the battery.

Examples of the nitrogen-atom containing monomer include acrylonitrile, imide compounds, amide compounds, and amide-imide compounds. From the aspect of the binding performance and coating performance, the polymers of the binder preferably contain acrylonitrile as a monomer component.

The binder may include, as polymers, at least one selected from the following types A and B : Type A is a polymer or copolymer containing at least one selected from acrylonitrile and methacrylonitrile as a monomer. Type B is a polymer or copolymer containing at least one selected from imide and amide as a monomer.

In addition to the polymer containing nitrogen-atom containing monomers, the binder may contain another binder. Examples of other binders include polytetrafluoroethylene (PTFE), polyvinylidene fluoride (PVdF), fluorine-based rubbers, a polyacrylic acid compound, carboxyl methyl cellulose (CMC), and salts of CMC.

The mass of the polymer that contain the nitrogen-atom containing monomers with respect to the mass of the binder falls within the range of 80% or more and 100% or less by mass, where the higher ratio is more preferable.

The ratios of the active material, the conductive material, and the binder contained in the active-material containing layer are preferably 80% or more and 95% or less by mass, 2% or more and 20% or less by mass, and 0.01% or more and 2.8% or less by mass, respectively. If the amount of the binder is extremely small, the surface of the active material particles may not be sufficiently coated. If this is the case, the side reaction between the active material and the electrolyte may not be sufficiently suppressed, and changes in the crystal structure of the active material may not be sufficiently suppressed. If the amount of the binder is excessive, the surface of the active material may be excessively coated. As a result, the battery resistance will tend to be increased, and the input/output performance will tend to be reduced.

The binder is contained in the active-material containing layer preferably in the amount of 0.1 parts or more and 3 parts or less by mass, with respect to 100 parts by mass of the active material particles. More preferably, the binder is contained in the amount of 0.5 parts or more and 2.5 parts or less by mass, with respect to 100 parts by mass of the active material particles.

The binder preferably coats the surfaces of the active material particles. The coating ratio of the surfaces of the active material particles with the binder is preferably 85% or higher and 99.9% or lower. The coating ratio can be measured by a combination of a field emission scanning electron microscope (FE-SEM) and energy dispersive X-ray spectrometry (EDX), which will be described later.

When the surfaces of the active material particles are coated with the binder that contains a polymer material containing nitrogen atoms, with a coating ratio of 85% or higher and 99.9% or lower, a coating effect of the binder can be suitably attained. If the coating ratio is lower than 85%, 15% or more of the surfaces of the active material particles is exposed. This means that a large area will appear in which the suppressing effect of the side reaction and the suppressing effect of the crystal structure change cannot be attained. If this is the case, the binder may not be able to sufficiently produce the protection effect as a coating film.

The use of a binder containing a nitrogen-atom containing polymer material having a high affinity with the surface of the active material works effectively to achieve a coating ratio of 85% or higher . With the use of a polymer material that contains atoms such as fluorine and sulfur, a coating ratio of 85% or more is difficult to attain. In addition, coating effects such as suppression of side reactions or suppression of crystal structure changes cannot be expected from this case.

If the coating ratio exceeds 99.9%, the surface of the active material may be excessively covered. Such a coating film may inhibit the oxidation-reduction reaction of lithium ions. If this is the case, the reaction resistance may be significantly increased, and the resistance of the battery may also be increased, which deteriorates the input/output performance. When a binder that contains polymers containing nitrogen atoms is excessively added, or when a coating film that contains nitrogen atoms is formed from an electrolyte solvent, an electrolyte additive, and the like through an electrochemical reaction such as charging and discharging, there is a possibility that the coating ratio may exceed 99.9%. If the binder is contained in an amount of more than 3 parts by mass with respect to 100 parts by mass of the active material particles, the coating ratio may exceed 99.9%.

The particle size distribution chart of the electrode according to the embodiment can be obtained through laser diffraction scattering. The particle size distribution chart is a graph in which the horizontal axis represents the particle size [μm] and the vertical axis represents the frequency (distribution of frequency) [%]. The particle size distribution chart obtained for the electrode by the laser diffraction scattering shows peak A and peak B whose particle sizes corresponding to their peak tops are different each other.

The particle size DA corresponding to the peak top of the peak A is smaller than the particle size DB corresponding to the peak top of the peak B.

The peak A may be a peak associated with the primary particles of the active material or the conductive material. The primary particles of the active material may be the active material of a secondary particle structure that is broken up. The peak A is a peak that has the highest frequency of the peak top within a particle size range of 0.2 μm to 3 μm in the particle size distribution chart.

The particle size DA corresponding to the peak top of the peak A may be within the range of 0.2 μm to 3 μm, and preferably within the range of 0.5 μm to 2 μm. With the particle size DA in this range, the increase in the initial resistance can be suppressed by increasing the frequency of the primary particles of the broken active material. If the particle size DA is smaller than 0.2 μm, the particle size of the primary particles of the active material is too small, and the surface area of the active material is too large. This may result in insufficiency of the conductive material. If the particle size DA exceeds 3 μm, the particle size of the primary particles of the active material is too large and may increase the diffusion distance of lithium ions in the entire active-material containing layer. That is, when the particle size DA corresponding to the peak top of the peak A falls out of the range of 0.2 μm to 3 μm, it may be difficult to suppress the increase in the initial resistance.

The peak B may be a peak associated with the secondary particles or primary particles of the active material. The peak B is a peak that has the highest frequency of the peak top within the particle size range of 1 μm to 20 μm in the particle size distribution chart. If two peaks appear in the particle size range of 0.2 μm to 3 μm of the particle size distribution chart, a peak having a peak top corresponding to a smaller particle size is defined as a peak A.

The particle size DB corresponding to the peak top of the peak B may be within the range of 1 μm to 20 μm, and preferably within the range of 3 μm to 10 μm. If the particle size DB is less than 1 μm, the particle size of the secondary particles and the primary particles of the active material is too small, and the surface area of the active material is too large. This may result in insufficiency of the conductive material. If the particle size DB exceeds 20 μm, the particle size of the secondary particles or the primary particles of the active material is too large, and may increase the diffusion distance of the entire lithium ion in the active-material containing layer. That is, when the particle size DB corresponding to the peak top of the peak B falls out of the range of 1 μm to 20 μm, it may be difficult to suppress an increase in the initial resistance.

The frequency PA of the peak top of the peak A may fall within the range of 1% or higher and 4% or lower, and preferably within the range of 1.5% or higher and 3.5% or lower. If the frequency PA is lower than 1%, the primary particles of the active material and the conductive material associated with the peak A exhibit a low abundance ratio with respect to the total number of particles constituting the active-material containing layer. If this is the case, the active material existing as the secondary particles may have an abundance ratio that is too high. In other words, the secondary particles of the active material may not be sufficiently broken up into the primary particles, or the conductive material may not be sufficiently dispersed (with the aggregate insufficiently broken up). On the other hand, when the frequency PA exceeds 4%, an excessive amount of active material is present as the primary particles with respect to the amount of active material present as the secondary particles. This makes the conductive material insufficient with respect to the surface area of the active material. A frequency PA in the range of 1% or higher and 4% or lower can attain both the effect of suppressing the increase in the initial resistance and the effect of suppressing the increase in the resistance through the repetition of charging and discharging. Thus, excellent input/output performance and cycle life characteristics can be realized.

The frequency PB of the peak top of the peak B may be in the range of 2% or higher and 8% or lower, and preferably in the range of 2.5% or higher and 7% or lower. If the frequency PB is lower than 2%, the abundance ratio of the secondary particles of the active material associated with the peak B become low with respect to the total number of particles constituting the active-material containing layer. In other words, the excessive amount of the secondary particles of the active material may be broken up into the primary particles. In this case, the conductive material may be insufficient with respect to the surface area of the active material. If the frequency PB exceeds 8%, the abundance ratio of the secondary particles of the active material associated with the peak B becomes high. In other words, the secondary particles of the active material may not be sufficiently broken up into the primary particles. A frequency PB in the range of 2% or higher and 8% or lower can attain both the effect of suppressing the increase in the initial resistance and the effect of suppressing the increase in the resistance through the repetition of charging and discharging. Thus, excellent input/output performance and cycle life characteristics can be realized.

The ratio PA/PB of the frequency PA of the peak top of the peak A and the frequency PB of the peak top of the peak B falls within the range of 0.2 or higher and 1.5 or lower. The ratio PA/PB is preferably in the range of 0.3 or higher and 1.1 or lower.

A ratio PA/PB lower than 0.2 indicates that the abundance ratio of the peak A, which is associated with particles having a relatively small particle size, to the peak B is excessively small. If this is the case, since a sufficient reaction area between the active material and the electrolyte may not be acquired, the reaction resistance of the coating due to the surface of the active material with the binder greatly increases. This affects the battery, reducing its input/output performance and low-temperature characteristics. A ratio PA/PB exceeding 1.5 indicates that the abundance ratio of the peak A, which is associated with particles having a relatively small particle size, to the peak B is excessively large. If this is the case, since the reaction area between the active material and the electrolyte is excessively large, the surfaces of the active material particles is insufficiently coated with the binder. As a result, the side reaction between the active material and the electrolyte, and the change in the crystal structure of the active material, cannot be suppressed, preventing excellent input/output performance and cycle life characteristics from being realized.

The average particle size (D50) in the particle size distribution chart of the electrode according to the embodiment is preferably in the range of 1.5 $\mu$m or larger and 6 $\mu$m or smaller. When the average particle size (D50) is within this range, the effect that can be attained with the ratio PA/PB being within the range of 0 .2 or higher and 1.5 or lower can be further easily attained. With the average particle size (D50) being within the range of 1.5 $\mu$m or higher and 6 $\mu$m or lower, both the effect of suppressing the increase in the initial resistance and the effect of suppressing the increase in the resistance through the repetition of charging and discharging can be attained. Thus, further excellent input/output performance and cycle life characteristics can be realized. If the average particle size (D50) is smaller than 1.5 $\mu$m, the reaction area between the active material and the electrolytes is excessively large, and therefore the surfaces of the active material particles with the binder may be insufficiently coated. If the average particle size (D50) is larger than 6 $\mu$m, the reaction area between the active material and the electrolytes cannot be sufficiently acquired. Then, the reaction resistance increase due to the coating of the surfaces of the active material with the binder greatly affects the battery. As a result, the input/output performance and low-temperature characteristics of the battery may be deteriorated.

<Measurement of particle size distribution in electrode>

The particle size distribution chart for the electrode according to the embodiment is obtained through the measurement procedure described below.

First, if the electrode is incorporated as a positive electrode in a battery, the positive electrode is removed from the battery, immersed in ethyl methyl carbonate to remove the Li salt, and then dried. In this dried electrode, only the positive electrode active-material containing layer is stripped off from the current collector with a spatula, and is immersed in an N-methyl-2-pyrrolidone (NMP) solvent. Thereafter, the positive electrode active-material containing layer that is being immersed in the NMP solvent is dispersed into the NMP solvent, using ultrasonic waves to obtain a sample dispersion solution. Upon this dispersion solution, the particle size distribution measurement of the constituent particles is conducted, using a laser diffraction type distribution measurement apparatus. As the measurement apparatus, Microtrac MT3100II of MicrotracBEL may be employed.

The ultrasonic treatment for obtaining the dispersion solvent is performed by a sample preparation system attached to the laser diffraction type distribution measurement apparatus. The ultrasound treatment is performed at a power of 40 W for 300 seconds.

From the particle size distribution chart obtained through the measurement, the peak A and the peak B are determined in accordance with the definition described above. The average particle size (D50) of the particles that constitute the active-material containing layer can be determined from the particle size distribution chart.

<Measurement of coating ratio>

The coating ratio of the surface of the active material particles with the binder can be measured by the procedure described below.

The active material particles and the conductive material particles can be observed in the cross section of the active-material containing layer under a field emission scanning electron microscope (FE-SEM). The active material particles and the binder can be distinguished in the cross section of the active-material containing layer with energy dispersive X-ray spectrometry (EDX). The mapping image of the cross section of the active-material containing layer can be obtained in the manner described below.

When the positive electrode is to be measured, after bringing the battery to a discharged state, the positive electrode is removed from the battery. The removal of the positive electrode may be performed in an inert atmosphere such as an argon atmosphere. Thereafter, the positive electrode is immersed in ethyl methyl carbonate to remove the Li salt, and then dried to obtain a measurement sample. The method for preparing an observation cross section is not particularly limited as long as the cross section can be obtained. An appropriate method should be selected depending on the ease of processing the positive electrode. In particular, the positive electrode prepared as a measurement sample may be cut with a razor or a microtome, split in liquid nitrogen, or cut with an Ar or Ga ion beam. The sample may be prepared, if necessary, by filling voids in the positive electrode active-material containing layer with a filler such as resin.

Next, the processed positive electrode is attached to the apparatus sample stage. Here, the positive electrode should be suitably treated with a conductive tape or the like so that the positive electrode will not come off or be lifted from the sample stage. If necessary, the positive electrode may be cut into a size suitable for the attachment to a sample plate. For the measurement, the positive electrode is maintained in an inert atmosphere when being introduced into the sample chamber. With respect to the positive electrode prepared as described above, the cross section of its positive electrode active-material containing layer is measured under the FE-SEM at a magnification of 30000 times. Furthermore, the EDX element mapping analysis is performed upon this analysis range so that the positive electrode active material and the binder can be distinguished. The positive electrode active material can be identified through the elemental mapping of its constituent elements Ni, Mn and Co, while the binder can be identified through the elemental mapping of its constituent element N.

Next, the coating ratio of the active material surface with the binder is determined on the cross section of the positive electrode active-material containing layer. The largest particles and the smallest particles are excluded from the positive electrode active material particles identified by the FE-SEM measurement and EDX analysis of the cross section of the positive electrode active-material containing layer. For the positive electrode active material particles excluding the largest particles and the smallest particles, the mapping image of an N element associated with the binder in the area surrounding the particles is binarized. Further, the value obtained by determining the abundance ratio of the N element is defined as the binder coating ratio.

Specifically, for particles determined to be the primary particles of the active material on the binarized cross-section image, first, the outer peripheral length of a primary particle, and the outer peripheral length of the portion where the N element is present, are calculated from the image. Next, the coating ratio (percentage) of the active material particles with the binder is calculated in accordance with the following formula:

$$\text{(Outer peripheral length of outer peripheral portion of primary particles where N element is present)} / \text{(length of outer peripheral portion of primary particles)} \times 100$$

Furthermore, for particles determined to be secondary particles of the active material on the binarized cross-sectional image, the outer peripheral length of a secondary particle, and the outer peripheral length of the portion where the N element is present, are calculated from the image. The side of the secondary particles that is in contact with any constituent materials other than the active material is defined as the outer side of the secondary particles. In the binarized cross-sectional image, the outline of the outer side of the secondary particles is defined as the outer periphery of the secondary particles. Next, the coating ratio (percentage) of the active material particles with the binder is calculated in accordance with the following formula:

$$\text{(Outer peripheral length of outer peripheral portion of secondary particles where N element is present)} / \text{(length of outer peripheral portion of secondary particles)} \times 100$$

In the above manner, the coating ratio of the surface of the active material particles with the binder can be determined.

<Measurement of binder content in active-material containing layer>

An electrode (e.g. positive electrode) is removed from the battery, immersed in ethyl methyl carbonate to remove a Li salt, and then dried to obtain a measurement sample. This measurement sample is subjected to thermogravimeter-differential thermal analyzer (TG/DTA) using a differential thermal balance. Through detection of a change in weight in accordance with the temperature and atmosphere, constituents that have been thermally decomposed and vaporized from the measurement sample electrode can be quantified. That is, the amount of binder contained in the electrode can be quantitatively identified.

Next, the method of manufacturing the electrode according to the embodiment will be described.

A dispersion solution may be obtained by suspending the active material, the conductive material and the binder in a suitable solvent. This dispersion solution is subjected to a dispersion process including bead milling, thereby obtaining a slurry for forming an active-material containing layer. The obtained slurry is applied to one or two surfaces of a current collector and dried so that a stacked body in which active-material containing layers are stacked can be obtained. The stacked body is pressed and cut out as necessary to produce electrodes. A conductive tab may be welded to the current collector.

When bead milling is adopted for the dispersion, the particle sizes of the constituent materials of the active-material containing layer can be controlled through the adjustment of the material, size and filling rate of the beads, the revolutions of the blades, and the processing time. That is, through the adjustment of these factors in combination, the particle sizes and frequencies of the peak A and the peak B can be adjusted.

In order to increase the frequency PA of the peak A, the secondary particles of the active material need to be broken up, or the conductive material needs to be disaggregated, so that the abundance ratio of the active material particles and the conductive material existing in the form of the primary particles can be increased. This means that, in order to increase the frequency PA of the peak A, it is preferable to perform dispersion using a large collision energy such as that in bead milling dispersion. In particular, dispersion is preferably performed upon a solution paste obtained by mixing the mixture layer forming material and a solvent such as NMP, using a bead mill such as a sand grinder.

For example, by highly dispersing the dispersion solution through the adjustment of the material, size and filling rate of the beads, the revolutions of the blades, and the processing time in combination, the frequency PA of the peak A increases, which tends to increase the ratio PA/PB. On the other hand, by weakly dispersing the dispersion solution through the adjustment of the material, size and filling rate of the beads, the revolutions of the blades, and the processing time in combination, the frequency PB of the peak B increases, which tends to reduce the ratio PA/PB.

Actually, the frequency PB of the peak B greatly depends on the particle size distribution of the active material particles used. For example, the frequency of the peak B tends to increase if an active material having a high ratio of particles in the secondary particle structure to the total number of particles is adopted. On the other hand, the frequency of the peak B tends to be lowered if an active material having a high ratio of particles in the primary particle structure to the total number of particles is adopted.

For example, the lithium-containing nickel cobalt manganese composite oxide exhibits a high ratio of particles in the secondary particle structure to the total number of particles. In addition, the lithium-containing cobalt oxide exhibits a high ratio of particles in the primary particle structure to the total number of particles. The lithium-containing manganese oxide also exhibits a high ratio of particles in the primary particle structure to the total number of particles.

The electrode according to the first embodiment includes an active-material containing layer that contains active material particles and a binder, which contains a polymer that contain monomers containing nitrogen atoms. The active material particles contain at least one selected from the group consisting of a lithium-containing nickel cobalt manganese composite oxide, a lithium-containing cobalt oxide, and a lithium-containing manganese oxide. The particle size distribution chart of the electrode obtained by the laser diffraction scattering has peak A and peak B whose particle sizes corresponding to their peak tops are different from each other. The particle size DA corresponding to the peak top of the peak A is smaller than the particle size DB corresponding to the peak top of the peak B. The ratio PA/PB of the frequency PA of the peak top of the peak A and the frequency PB of the peak top of the peak B falls within the range of 0.2 or larger and 1.5 or smaller. Thus, the secondary battery including the electrode according to the embodiment demonstrates excellent input/output performance and cycle life characteristics.

(Second Embodiment)

According to a second embodiment, a nonaqueous electrolyte battery including a negative electrode, a positive electrode, and an electrolyte can be provided. The nonaqueous electrolyte battery according to the second embodiment may be a lithium ion secondary battery.

The nonaqueous electrolyte battery according to the second embodiment may further include a separator between the positive electrode and the negative electrode. The negative electrode, the positive electrode, and the separator may constitute an electrode group. The electrolyte may be retained in the electrode group. In the electrode group, the positive electrode active-material containing layer and the negative electrode active-material containing layer may face each other with the separator interposed between.

The nonaqueous electrolyte battery according to the second embodiment may further include a container member that accommodates the electrode group and the electrolyte, a negative electrode terminal electrically connected to the negative electrode, and a positive electrode terminal electrically connected to the positive electrode.

The negative electrode, positive electrode, electrolyte, separator, container member, negative electrode terminal, and positive electrode terminal will be described in detail below.

(1) Positive electrode

As a positive electrode, the electrode according to the first embodiment described above can be adopted.

The positive electrode active-material containing layer (excluding the current collector) preferably exhibits a density of $2.6g/cm^3$ or higher and $3.5g/cm^3$ or lower. A positive electrode having the density of the positive electrode active-material containing layer within this range is excellent in energy density and electrolyte retention. It is further preferable that the density of the positive electrode active-material containing layer be within the range of $2.8g/cm^3$ or higher and $3.3g/cm^3$ or lower.

(2) Negative electrode

The negative electrode may include a negative electrode current collector and a negative electrode active-material containing layer formed on the negative electrode current collector.

The negative electrode current collector may include a portion that does not bear the negative electrode active-material containing layer on its surface. This portion can serve as a negative electrode tab. Alternatively, the negative electrode may further include a negative electrode tab separately from the negative electrode current collector. The negative electrode active-material containing layer contains a negative electrode active material.

As the negative electrode current collector, a sheet containing a material of a high electrical conductivity may be adopted. For instance, an aluminum foil or an aluminum alloy foil may be used as the negative electrode current collector. If an aluminum foil or an aluminum alloy foil is used, its thickness may be preferably 20 $\mu$m or less. The aluminum alloy foil may include magnesium, zinc, silicon, and the like. The amount of transition metal such as iron, copper, nickel, or chromium contained in the aluminum alloy foil is preferably 1% or less by mass.

As a negative electrode active material, at least one selected from a metal, an alloy, a metal oxide, a metal sulfide, a metal nitride, a graphitic material and a carbonaceous material may be used. As a metal oxide, a titanium containing substance may be used. Examples of such a titanium containing substance include a lithium titanium composite oxide. Examples of a metallic sulfide include titanium sulfides such as $TiS_2$, molybdenum sulfides such as $MoS_2$, and iron sulfides such as $FeS$, $FeS_2$ and $Li_xFeS_2$. Examples of the graphitic material and the carbonaceous material include natural graphite, artificial graphite, coke, vapor-grown carbon fiber, mesophase pitch-based carbon fiber, spherical carbon, and resin-sintered carbon. Different negative electrode active materials may be used in mixture.

Examples of the titanium containing material include monoclinic titanium dioxide ($TiO_2$), anatase titanium dioxide, rutile titanium dioxide, hollandite-type titanium composite oxides, orthorhombic titanium containing composite oxides, and monoclinic niobium titanium composite oxides.

Examples of the lithium titanium composite oxide include lithium titanates having a spinel structure (e.g., $Li_{4+x}Ti_5O_{12}$, $0 \leq x \leq 3$) and lithium titanates having a ramsdellite structure (e.g., $Li_{2+y}Ti_3O_7$, $0 \leq y \leq 3$).

The negative electrode active material may be contained as particles in the negative electrode active-material containing layer. The average particle size of the primary particles of the negative electrode active material particles is preferably 5 $\mu$m or less. With the average particle size of the primary particles being 5 $\mu$m or less, an effective area contributing to an electrode reaction can be sufficiently acquired, which can realize excellent performance of large-current discharging in the nonaqueous electrolyte battery.

The negative electrode active-material containing layer may further contain a conductive material and a binder as needed.

The conductive material may be used as needed, in order to improve the current collecting performance. The conductive material may be a carbon material. The carbon material preferably has a high insertion property of alkali metal ions and a high conductivity. Examples of the carbon material include acetylene black, carbon black, graphite, carbon fiber, and graphene. A single material or two or more materials may be adopted for the conductive material.

The binder is used for binding the negative electrode active material particles and the negative electrode current collector. Examples of the binder include polytetrafluoroethylene (PTFE), polyvinylidene fluoride, fluorine-based rubber, styrene butadiene rubber (SBR), polypropylene (PP), polyethylene (PE), and carboxyl methyl cellulose (CMC). A single type or two or more types may be adopted for the binder.

The rates of the negative electrode active material, the negative electrode conductive material, and the binder contained in the negative electrode active-material containing layer are preferably 70% or higher by mass and 95% or lower by mass, 0% or higher by mass and 25% or lower by mass, and 2% or higher by mass and 10% or lower by mass, respectively.

The negative electrode may be produced by the procedure described below. First, a negative electrode active material, a conductive material, and a binder are introduced into an appropriate solvent, such as N-methylpyrrolidone, to prepare a slurry. This slurry is applied to both of the main surfaces of the negative electrode current collector, and the coated film is dried. The slurry may be applied only to one of the main surfaces of the negative electrode current collector. Next, the dried coated film is pressed into a negative electrode active-material containing layer having a desired density, thereby completing a negative electrode. (3) Separator

The separator is not particularly limited as long as it exhibits insulating properties. A porous film or nonwoven fabric made of polymers such as polyolefin, cellulose, polyethylene terephthalate, or vinylon may be adopted for the separator. A single type of material may be adopted for the separator, or a combination of two or more types may be adopted.

The separator preferably includes pores having a diameter of 10 $\mu$m or larger and 100 $\mu$m or smaller. The thickness of the separator is preferably 2 $\mu$m or larger and 30 $\mu$m or smaller.

(4) Nonaqueous electrolyte

The nonaqueous electrolyte may include a nonaqueous solvent and an electrolyte salt dissolved in the nonaqueous solvent. The nonaqueous electrolyte may contain polymers.

Examples of the nonaqueous solvent include propylene carbonate (PC), ethylene carbonate (EC), 1,2-dimethoxyethane (DME), $\gamma$-butyrolactone (GBL), tetrahydrofuran (THF), 2-methyltetrahydrofuran (2-MeHF), 1,3-dioxolane, sulfolane, acetonitrile (AN), diethyl carbonate (DEC), dimethyl carbonate (DMC), methylethyl carbonate (MEC), and dipropyl carbonate (DPC). A single type of solvent may be adopted, or a mixture of two or more types may be adopted. When two or more types of solvents are combined, it is preferable to select solvents each having a dielectric constant of 20 or higher.

The electrolyte salt may be an alkali salt, or preferably a lithium salt. Examples of the electrolyte salt include lithium salts such as $LiPF_6$, $LiBF_4$, $Li(CF_3SO_2)_2N$ (lithium bistrifluoromethanesulfonyl imide or commonly called LiTFSI), $LiCF_3SO_3$ (commonly called LiTFS), Li $(C_2F_5SO_2)_2N$ (lithium bispentafluoroethanesulfonylamide or commonly called LiBETI), $LiClO_4$, $LiAsF_6$, $LiSbF_6$, and lithium bisoxalatoborate (LiB(C2O4)2, or commonly called LiBOB), lithium difluoro(oxalato)borate ($LiF_2BC_2O_4$), lithium difluoro (trifluoro-2-oxido-2-trifluoro-methylpropionato(2-)-0,0) borate ($LiBF_2(OCOOC(CF_3)_2$, or commonly called $LiBF_2$(HHIB)), and lithium difluorophosphate ($LiPO_2F_2$). These electrolyte salts may be used alone or in a combination of two or more types. In particular, at least one selected from the group consisting of $LiPF_6$, $LiBF_4$, lithium bis (oxalato) borate (LiB($C_2O_4)_2$, or commonly called LiBOB), and lithium difluoro(oxalato)borate ($LiF_2BC_2O_4$), difluoro(trifluoro-2-oxido-2-trifluoro-methylpropionato(2-) -0,0) lithium borate ($LiBF_2(OCOOC(CF_3)_2$), or commonly called $LiBF_2$(HHIB)), and lithium difluorophosphate ($LiPO_2F_2$) may be preferably used.

The concentration of the electrolyte salt is preferably in the range of 0.5 M or higher and 3.0 M or lower. In this manner, the performance can be improved when a high load current is applied.

The nonaqueous electrolyte may contain other components. These components are not particularly limited, examples of which include vinylene carbonate (VC), fluorovinylene carbonate, methylvinylene carbonate, fluoromethylvinylene carbonate, ethylvinylene carbonate, propylvinylene carbonate, butylvinylene carbonate, dimethylvinylene carbonate, diethylvinylene carbonate, dipropylvinylene carbonate, vinylene acetate (VA), vinylene butyrate, vinylene hexanate, vinylene crotonate, catechol carbonate, propane sultone, and butane sultone. A single type or two or more types may be adopted as the additives.

(5) Negative electrode terminal and positive electrode terminal

With part of the negative electrode terminal electrically connected to part of the negative electrode, the negative electrode terminal serves as a conductor that allows electrons to move between the negative electrode and the external terminal. The negative electrode terminal may be connected to the negative electrode current collector, or particularly to the negative electrode tab. Similarly, with part of the positive electrode terminal electrically connected to part of the positive electrode, the positive electrode terminal serves as a conductor that allows electrons to move between the positive electrode and an external circuit. The positive electrode terminal may be connected to the positive electrode current collector, or particularly to the positive electrode tab. The negative electrode terminal and the positive electrode terminal are preferably formed of a material having a high electrical conductivity. In the case of being connected to the current collector, these terminals are preferably formed of the same material as the current collector so as to reduce the contact resistance.

(6) Container member

As the container member, a metal container or a laminate film container may be adopted, but the container is not particularly limited. Through the use of a metal container as the container member, a nonaqueous electrolyte battery excellent in impact resistance and long-term reliability can be realized. With a laminate film container adopted as the container member, a nonaqueous electrolyte battery having excellent corrosion resistance can be realized. In addition, the weight of the nonaqueous electrolyte battery can be reduced.

If a metal container is adopted, a container having a sheet thickness in the range of 0.2 mm or larger and 5 mm or smaller may be used. The sheet thickness of the metal container is more preferably 0.5 mm or smaller.

The metal container preferably contains at least one metal element selected from the group consisting of Fe, Ni, Cu, Sn and Al. The metal container may be made of aluminum or an aluminum alloy. The aluminum alloy is preferably an alloy containing an element such as magnesium, zinc, or silicon. If the alloy contains a transition metal such as iron, copper, nickel or chromium, the content thereof is preferably 1% or less by mass. In this manner, the long-term reliability and impact resistance in a high-temperature environment can be significantly improved.

The film thickness of the laminate film container may be within the range of 0.1 mm or larger and 2 mm or smaller. More preferably, the thickness of the laminate film is 0.2 mm or smaller.

The laminate film may be formed of a multilayer film including a metal layer and resin layers between which the metal layer is interposed. The metal layer preferably contains a metal containing at least one selected from the group consisting of Fe, Ni, Cu, Sn and Al. For weight reduction, the metal layer is preferably an aluminum foil or an aluminum alloy foil. For the resin layer, a polymer material such as polypropylene (PP), polyethylene (PE), nylon, or polyethylene terephthalate (PET) may be adopted. The laminate film can be formed into the shape of a container member through heat sealing.

The container member may be formed into a flat (thin) shape, a square shape, a cylindrical shape, a coin shape, and a button shape . The container member may have various dimensions in accordance with the application of use. When designing the nonaqueous electrolyte battery, for example, for a portable electronic device, the size of the container member can be reduced in accordance with the size of the electronic device on which the battery is to be installed. If the nonaqueous electrolyte battery is to be mounted on a two-wheel to four-wheel vehicle, a container of a large battery may be used.

Next, an example of the nonaqueous electrolyte battery according to the second embodiment will be described in further detail with reference to the drawings.

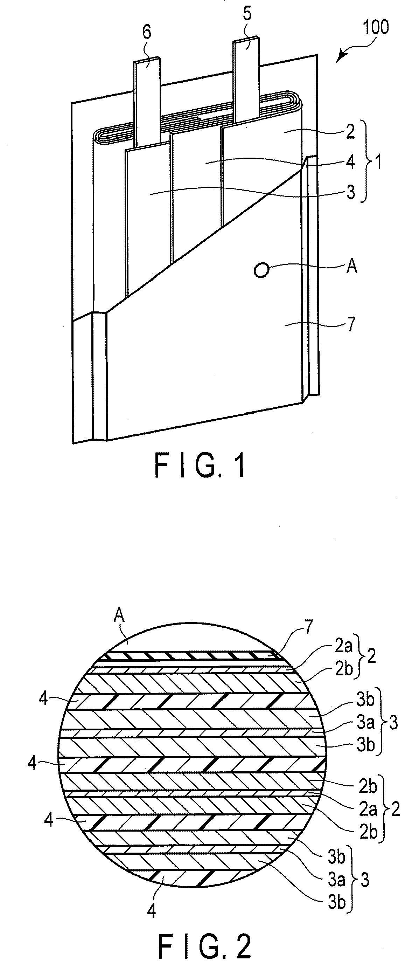

FIG. 1 is a partially cutaway perspective view showing an exemplary nonaqueous electrolyte battery according to the second embodiment. FIG. 2 is an enlarged cross-sectional view of portion A of the nonaqueous electrolyte battery illustrated in FIG. 1.

The nonaqueous electrolyte battery 100 shown in FIGS. 1 and 2 includes a flat electrode group 1. The flat electrode group 1 includes a negative electrode 2, a positive electrode 3, and a separator 4. The electrode group 1 has a structure in which the negative electrode 2 and positive electrode 3 are spirally wound into a flat shape, with the separator 4 interposed between. The electrode group of a wound type is described here; however, the electrode group may be of a stacked type, in which plural layers of negative electrodes 2, separators 4, and positive electrodes 3 are stacked.

As illustrated in FIG. 2, a negative electrode 2 includes a negative electrode current collector 2a and a negative electrode active-material containing layer 2b deposited on the negative electrode current collector 2a. As illustrated in FIG. 2, a positive electrode 3 includes a positive electrode current collector 3a and a positive electrode active-material containing layer 3b deposited on the positive electrode current collector 3a.

As illustrated in FIG. 1, in the nonaqueous electrolyte battery 100, a strip-shaped negative electrode terminal 5 is electrically connected to the negative electrode 2. In particular, the negative electrode terminal 5 is connected to the negative electrode current collector 2a. A strip-shaped positive electrode terminal 6 is electrically connected to the positive electrode 3. In particular, the positive electrode terminal 6 is connected to the positive electrode current collector 3a.

The nonaqueous electrolyte battery 100 further includes an outer container 7 made of a laminate film that serves as a container. That is, the nonaqueous electrolyte battery 100 includes a container member that is the outer container 7 of the laminate film.

The electrode group 1 is contained in the outer container 7 of the laminate film, with the end portions of the negative electrode terminal 5 and the positive electrode terminal 6 extending from the outer container 7. A nonaqueous electrolyte (not shown) is contained in the outer container 7 of the laminate film. The electrode group 1 is impregnated with the nonaqueous electrolyte. The peripheral portion of the outer container 7 is heat-sealed, and the electrode group 1 and the nonaqueous electrolyte are sealed therein.

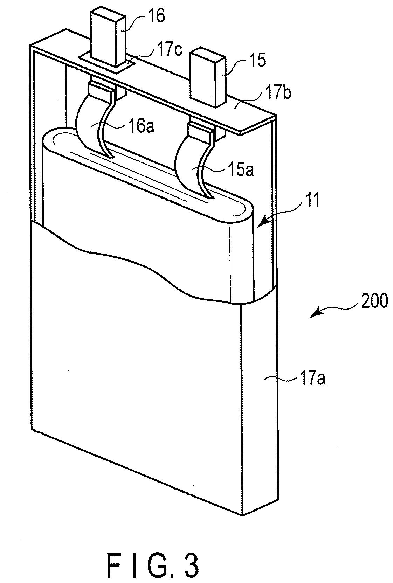

With reference to FIG. 3, another example of the nonaqueous electrolyte battery according to the second embodiment will be described in detail next. FIG. 3 is a partially cutaway perspective view showing another example of the nonaqueous electrolyte battery according to the second embodiment.

The nonaqueous electrolyte battery 200 illustrated in FIG. 3 differs from the nonaqueous electrolyte battery 100 of FIGS. 1 and 2 in the container member composed of a metal container 17a and a sealing plate 17b.

In a manner similar to the electrode group 1 in the nonaqueous electrolyte battery 100 of FIGS. 1 and 2, the flat electrode group 11 includes a negative electrode, a positive electrode, and a separator. The electrode group 11 has a structure similar to that of the electrode group 1. In the electrode group 11, however, a negative electrode tab 15a and a positive electrode tab 16a are connected, in place of the negative electrode terminal 5 and the positive electrode terminal 6, to the negative electrode and the positive electrode, respectively, as described later.

Such an electrode group 11 is contained in the metal container 17a of the nonaqueous electrolyte battery 200 illustrated in FIG. 3. The metal container 17a further contains a nonaqueous electrolyte (not shown). The metal container 17a is sealed with the metal sealing plate 17b. The metal container 17a and the sealing plate 17b constitute, for example, a packaging can as a container member.

One end of the negative electrode tab 15a is electrically connected to the negative electrode current collector, and the other end thereof is electrically connected to the negative electrode terminal 15. One end of the positive electrode tab 16a is electrically connected to the positive electrode current collector, and the other end thereof is electrically connected to the positive electrode terminal 16 fixed to the sealing plate 17b. The positive electrode terminal 16 is fixed to the sealing plate 17b by way of an insulating member 17c. The positive electrode terminal 16 and the sealing plate 17b are electrically insulated from each other by the insulating member 17c.

The nonaqueous electrolyte battery according to the second embodiment includes the electrode according to the first embodiment. Thus, the nonaqueous electrolyte battery according to the second embodiment can realize excellent input/output performance and cycle life characteristics.

(Third Embodiment)

According to a third embodiment, a battery pack is provided. This battery pack includes the nonaqueous electrolyte battery according to the second embodiment.

The battery pack according to the third embodiment may include a plurality of nonaqueous electrolyte batteries. The nonaqueous electrolyte batteries may be electrically connected in series or in parallel. Alternatively, the nonaqueous electrolyte batteries may be connected in a combination of serial connection and parallel connection.

The battery pack according to the third embodiment may include five nonaqueous electrolyte batteries. These nonaqueous electrolyte batteries may be connected in series. Furthermore, the nonaqueous electrolyte batteries connected in series may constitute a battery module. That is, the battery pack according to the third embodiment may include a battery module.

The battery pack according to the third embodiment may include a plurality of battery modules. The plurality of battery modules may be connected in series, in parallel, or in a combination of serial connection and parallel connection.

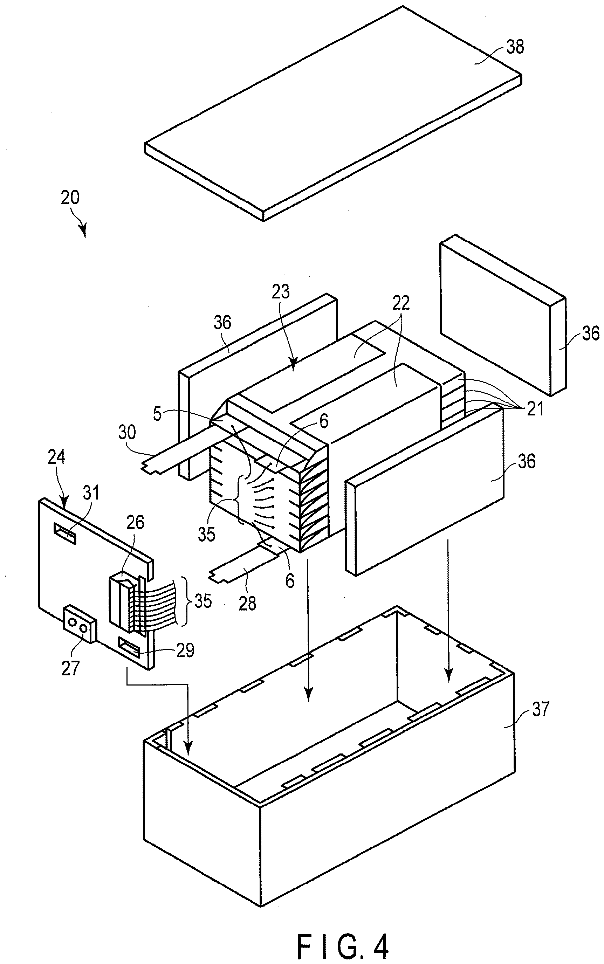

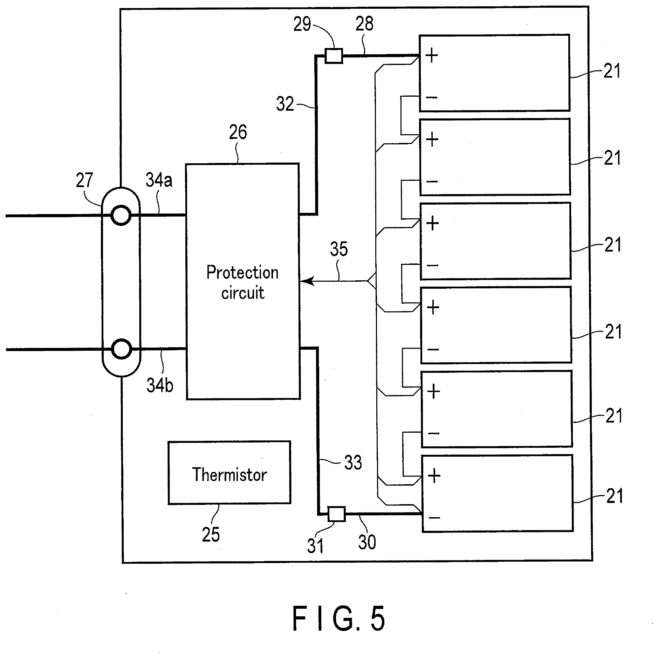

An exemplary battery pack according to the third embodiment will be described with reference to FIGS. 4 and 5. FIG. 4 is an exploded perspective view of an exemplary battery pack according to the third embodiment. FIG. 5 is a block diagram showing an exemplary electric circuit of the battery pack illustrated in FIG. 4.

The battery pack 20 shown in FIGS. 4 and 5 includes a plurality of unit cells 21. A unit cell 21 may be the exemplary flat nonaqueous electrolyte battery 100 of the second embodiment as described with reference to FIG. 1.

The unit cells 21 are stacked in a manner such that the externally extending negative electrode terminals 5 and positive electrode terminals 6 are aligned in the same direction, and the unit cells 21 are taped together with an adhesive tape 22 into a battery module 23. As shown in FIG. 5, these unit cells 21 are electrically connected to each other in series.

A printed wiring board 24 is arranged in such a manner as to face the side surface from which the negative electrode terminals 5 and the positive electrode terminals 6 of the unit cells 21 extend. As shown in FIG. 5, a thermistor 25, a protection circuit 26, and an energizing terminal 27 for energizing an external device are mounted on the printed wiring board 24. An insulating plate (not shown) is attached to the surface of the printed wiring board 24 facing the battery module 23 in order to avoid unnecessary connection with the wiring of the battery module 23.

A positive electrode-side lead 28 is connected to the positive electrode terminal 6 arranged in the lowermost layer of the battery module 23, with its distal end inserted into and electrically connected to the positive electrode-side connector 29 of the printed wiring board 24. A negative electrode-side lead 30 is connected to the negative electrode terminal 5 arranged in the uppermost layer of the battery module 23, with its distal end inserted into and electrically connected to the negative electrode-side connector 31 of the printed wiring board 24. The connectors 29 and 31 are connected to the protection circuit 26 through the wirings 32 and 33 provided on the printed wiring board 24.

The thermistor 25 detects the temperature of the unit cells 21, and the detection signal is transmitted to the protection circuit 26. The protection circuit 26 is capable of cutting off, under a predetermined condition, the positive-side wiring 34a and the negative-side wiring 34b between the protection circuit 26 and the energizing terminal 27 connected to the external device. Examples of the predetermined condition include the temperature detected by the thermistor 25 being equal to or higher than a predetermined temperature. Another example of the predetermined condition may be detection of overcharging, overdischarging, overcurrent, or the like in the unit cell 21. The detection of overcharging or the like is conducted upon individual unit cells 21 or upon the entire battery module 23. If individual unit cells 21 are to be detected, the battery voltage may be detected, or the positive electrode potential or the negative electrode potential may be detected. In the latter case, a lithium electrode is inserted as a reference electrode into each of the unit cells 21. In the battery pack 20 of FIGS. 4 and 5, wirings 35 are connected for voltage detection to the respective unit cells 21. The detection signal is transmitted to the protection circuit 26 by way of these wirings 35.

Protective sheets 36 made of rubber or resin are arranged on three of the side surfaces of the battery module 23, the side surface from which the positive electrode terminals 6 and the negative electrode terminals 5 are extending being excluded.

The battery module 23 is contained, together with the protective sheets 36 and the printed wiring board 24, in a housing container 37. That is, the protective sheets 36 are arranged on the two longer inner side surfaces and one of the shorter inner side surfaces of the housing container 37, while the printed wiring board 24 is arranged on the other one of the shorter inner side surfaces . The battery module 23 is positioned in a space enclosed by the protective sheets 36 and the printed wiring board 24. The lid 38 is attached to the top surface of the housing container 37.

Instead of the adhesive tape 22, a heat-shrinkable tape may be used to fix the battery module 23. If this is the case, the protective sheets are positioned on the two side surfaces of the battery module, the heat-shrinkable tape is wound around these surfaces, and thereafter the heat-shrinkable tape is thermally shrunk to bind the battery module.

In FIGS. 4 and 5, the unit cells 21 are connected in series, but they may be connected in parallel so as to increase the battery capacity. Furthermore, assembled battery packs may be connected in series and/or in parallel.

The form of the battery pack according to the third embodiment is changed as appropriate depending on its use. As the use of the battery pack according to the third embodiment, a battery pack expected to exhibit cycle characteristics at a large current performance is suitable. Specific examples of the use include power supplies for digital cameras and vehicle-mounted use such as two- to four-wheel hybrid electric vehicles, two- to four-wheel electric vehicles, and electric bicycles. The battery pack according to the third embodiment is particularly suitable for use in vehicles.

The battery pack according to the third embodiment includes the nonaqueous electrolyte battery according to the second embodiment. Thus, the battery pack according to the third embodiment can realize excellent input/output performance and cycle life characteristics.

[EXAMPLES]

The above embodiments will be described in further detail below, based on the examples.

(Example 1)

<Preparation of positive electrode>

As positive electrode active materials, lithium-containing nickel cobalt manganese composite oxide $(LiNi_{0.5}Co_{0.2}Mn_{0.3}O_2)$ having an average particle size of 6.5 $\mu$m and lithium-containing cobalt oxide $(LiCoO_2)$ having an average particle size of 7.0 $\mu$m were prepared. Graphite and acetylene black were prepared as a conductive material, and a polymer (polyacrylonitrile) having monomers of acrylonitrile was prepared as a binder. $LiNi_{0.5}Co_{0.2}Mn_{0.3}O_2$, $LiCoO_2$, graphite, acetylene black, and polyacrylonitrile were dispersed in N-methylpyrrolidone (NMP) in a mass ratio of 70:19:5:5:1. In this manner, a dispersion solution was obtained in the form of a paste. The obtained dispersion solution was subjected to bead milling dispersion so as to uniformly disperse the conductive material and the active material, thereby obtaining a slurry.

The bead milling dispersion was performed using a sand grinder, from Aimex Co., Ltd, which is a bead-type wet fine particle dispersion pulverizer. As media, glass beads having a bead diameter of 2 mm were used, with a bead filling rate of 40%. The dispersion conditions were determined to be a rotational speed of 800 rpm and treatment time of 60 minutes.

The slurry obtained after the bead milling dispersion was uniformly applied to both the front and back surfaces of a current collector, which is a strip-shaped aluminum foil, and dried to form a positive electrode active-material containing layer. Next, the dried strip was subjected to a pressing process to obtain a positive electrode.

<Preparation of negative electrode>

$Li_4Ti_5O_{12}$ was prepared as a negative electrode active material, graphite was prepared as a conductive material, and polyvinylidene fluoride was prepared as a binder. These materials were dispersed in N-methylpyrrolidone (NMP) at a mass ratio of 85:10:5 to prepare a slurry. The obtained slurry was uniformly applied to both the front and back surfaces of an aluminum foil having a thickness of 20 $\mu$m, and dried to form a negative electrode active-material containing layer. Thereafter, the dried strip was subjected to a pressing process to obtain a negative electrode.

<Preparation of electrode group>

Two polyethylene porous films were prepared as separators Next, a separator, the positive electrode, another separator, and the negative electrode were stacked in this order to form a stacked body. The obtained stacked body was spirally wound using a winding core in a manner such that the negative electrode was positioned at the outermost periphery. After the winding core was removed, the resultant body was pressed while being heated to prepare a wound electrode group.

<Preparation of nonaqueous electrolyte>

Ethylene carbonate (EC) and ethyl methyl carbonate (EMC) were mixed at a volume ratio of 1:2 to prepare a mixed solvent. Lithium hexafluorophosphate (LiPF$_6$) was dissolved as an electrolyte salt in this mixed solvent in a concentration of 1M (mol/L) to prepare a nonaqueous electrolyte solution.

<Preparation of battery>

A positive electrode terminal and a negative electrode terminal were respectively attached to the positive electrode and the negative electrode of the wound electrode group obtained as described above, and the electrode group was placed into a laminate container. Thereafter, the nonaqueous electrolyte was poured into a container that contains the electrode group, through the liquid inlet. Next, the liquid inlet was sealed to produce a nonaqueous electrolyte battery. In this manner, a flat nonaqueous electrolyte secondary battery having a thickness of 3.5 mm, a width of 35 mm, a height of 65 mm, and a mass of 25 g was produced. Table 1 summarizes various conditions for preparing the battery of Example 1. Table 1 also shows various conditions for preparing batteries of Examples 2 to 10 described below.

(Example 2)

The battery was prepared in the same manner as described in Example 1, except that the treatment time for the bead milling dispersion was set to 50 minutes when preparing a positive electrode.

(Example 3)

The battery was prepared in the same manner as described in Example 1, except that acrylonitrile copolymer was added as a binder in the amount of 1. 5% by weight when preparing a positive electrode. The acrylonitrile copolymer is a copolymer having acrylonitrile and acrylic acid as monomers. This copolymer contains 70 mol% or more of acrylonitrile.

(Example 4)

The battery was prepared in the same manner as described in Example 1, except that the treatment time for the bead milling dispersion was set to 100 minutes when preparing a positive electrode.

(Example 5)

The battery was prepared in the same manner as described in Example 1, except that the number of rotations of the bead milling dispersion was set to 700 rpm when preparing a positive electrode.

(Example 6)

The battery was prepared in the same manner as described in Example 1, except that the number of rotations of the bead milling dispersion was set to 700 rpm and the treatment time was set to 50 minutes.

(Example 7)

The battery was prepared in the same manner as in Example 1, except that a mixed solvent of ethylene carbonate (EC) and diethyl carbonate (DEC) mixed in a volume ratio of 1:1 was used as the solvent for the electrolyte.

(Example 8)

The battery was prepared in the same manner as in Example 1, except that a mixed solvent of ethylene carbonate (EC) and ethyl methyl carbonate (EMC) mixed at a volume ratio of 1:1 was used as the solvent for the electrolyte.

(Example 9)

The battery was prepared in the same manner as described in Example 1, except that, when preparing a positive electrode, a solution of $LiMn_2O_4$ having an average particle size of 6.0 $\mu$m, $LiCoO_2$ having an average particle size of 7.0 $\mu$m, graphite, acetylene black, and polyacrylonitrile dissolved in N-methylpyrrolidone (NMP) at a mass ratio of 70:19:5:5:1 was prepared as a dispersion solution prepared prior to the bead milling dispersion. That is, the positive electrode in Example 9 contained $LiMn_2O_4$ and $LiCoO_2$ as the positive electrode active materials.

(Example 10)

A battery was prepared in the same manner as described in Example 1, except that, when preparing a positive electrode, a solution of $LiNi_{0.5}Co_{0.2}Mn_{0.3}O_2$ having an average particle size of 6.5 $\mu$m, graphite, acetylene black, and polyacrylonitrile dissolved in N-methylpyrrolidone (NMP) at a mass ratio of 89:5:5:1 was prepared as a dispersion solution prepared prior to the bead milling dispersion. That is, the positive electrode according to Example 10 contained $LiNi_{0.5}Co_{0.2}Mn_{0.3}O_2$ as the positive electrode active material.

(Comparative Example 1)

The battery was prepared in the same manner as in Example 1, except that polyvinylidene fluoride (PVdF) was added as a binder in an amount of 3% by mass when preparing a positive electrode. Table 2 summarizes various conditions for preparing the battery of Comparative Example 1. Table 2 also shows various conditions for preparing batteries of Comparative Examples 2 to 6 described below.

(Comparative Example 2)

The battery was prepared in the same manner as in Example 1, except that the filling rate of the bead milling dispersion was set to 60% and the treatment time was set to 180 minutes when preparing a positive electrode.

(Comparative Example 3)

The battery was prepared in the same manner as described in Example 1, except that polyacrylonitrile was added as a binder in the amount of 1.5% by mass, the filling rate of the bead milling dispersion was set to 30%, the number of revolutions was set to 500 rpm, and the treatment time was set to 30 minutes when preparing a positive electrode.

(Comparative Example 4)

The battery was produced in the same manner as in Example 1, except that polyacrylonitrile was added as a binder in the amount of 5% by mass, the filling rate of the bead milling dispersion was set to 30%, the number of revolutions was set to 500 rpm, and the treatment time was set to 30 minutes when preparing a positive electrode.

(Comparative Example 5)

The battery was prepared in the same manner as in Example 1, except that lithium bistrifluoromethanesulfonylimide $(Li(CF_3SO_2)_2N; LiTFSI)$ of 1 M was used as an electrolyte salt, and polyvinylidene fluoride (PVdF) was added as a binder in the amount of 3% by mass.

(Comparative Example 6)

The battery was prepared in the same manner as in Example 1, except that polyacrylonitrile was added as a binder in the amount of 5% by mass, the filling rate of the bead milling dispersion was set to 60%, and the treatment time was set to 180 minutes when preparing a positive electrode.

[Table 1]

| Table 1 | Positive electrode active material | Electrolyte | | Binder | Amount of binder added | Bead mill dispersion condition | | |
|---|---|---|---|---|---|---|---|---|
| | | Solvent | Electrolyte salt | | | Filling rate | Revolutions of blades | Processing time |
| Unit | - | Volume ratio | | | Weight % | % | rpm | Minutes |
| Example 1 | $LiNi_{0.5}Co_{0.2}Mn_{0.3}O_2$, $LiCoO_2$ | EC : EMC = 1 : 2 | $1M - LiPF_6$ | Polyacrylonitrile | 1.0 | 40 | 800 | 60 |
| Example 2 | $LiNi_{0.5}Co_{0.2}Mn_{0.3}O_2$, $LiCoO_2$ | EC : EMC = 1 : 2 | $1M - LiPF_6$ | Polyacrylonitrile | 1.0 | 40 | 800 | 50 |
| Example 3 | $LiNi_{0.5}Co_{0.2}Mn_{0.3}O_2$, $LiCoO_2$ | EC : EMC = 1 : 2 | $1M - LiPF_6$ | Acrylonitrile copolymer | 1.5 | 40 | 800 | 60 |
| Example 4 | $LiNi_{0.5}Co_{0.2}Mn_{0.3}O_2$, $LiCoO_2$ | EC : EMC = 1 : 2 | $1M - LiPF_6$ | Polyacrylonitrile | 1.0 | 40 | 800 | 100 |
| Example 5 | $LiNi_{0.5}Co_{0.2}Mn_{0.3}O_2$, $LiCoO_2$ | EC : EMC = 1 : 2 | $1M - LiPF_6$ | Poly acrylonitrile | 1.0 | 40 | 700 | 60 |
| Example 6 | $LiNi_{0.5}Co_{0.2}Mn_{0.3}O_2$, $LiCoO_2$ | EC : EMC = 1 : 2 | $1M - LiPF_6$ | Polyacrylonitrile | 1.0 | 40 | 700 | 50 |
| Example 7 | $LiNi_{0.5}Co_{0.2}Mn_{0.3}O_2$, $LiCoO_2$ | EC : DEC = 1 : 1 | $1M - LiPF_6$ | Polyacrylonitrile | 1.0 | 40 | 800 | 60 |
| Example 8 | $LiNi_{0.5}Co_{0.2}Mn_{0.3}O_2$, $LiCoO_2$ | EC : EMC = 1 : 1 | $1M - LiPF_6$ | Polyacrylonitrile | 1.0 | 40 | 800 | 60 |
| Example 9 | $LiMn_2O_4$, $LiCoO_2$ | EC : EMC = 1 : 2 | $1M - LiPF_6$ | Polyacrylonitrile | 1.0 | 40 | 800 | 60 |
| Example 10 | $LiNi_{0.5}Co_{0.2}Mn_{0.3}O_2$ | EC : EMC = 1 : 2 | $1M - LiPF_6$ | Polyacrylonitrile | 1.0 | 40 | 800 | 60 |

[Table 2]

| Table 2 | Positive electrode active material | Electrolyte | | Binder | Amount of binder added | Bead mill dispersion condition | | |
|---|---|---|---|---|---|---|---|---|
| | | Solvent | Electrolyte salt | | | Filling rate | Revolutions of blades | Processing time |
| Unit | - | Volume ratio | - | - | Weight % | % | rpm | Minutes |
| Comparative Example 1 | $LiNi_{0.3}Co_{0.2}Mn_{0.3}O_2$, $LiCoO_2$ | EC : EMC = 1 : 2 | $1M - LiPF_6$ | PVdF | 3.0 | 40 | 800 | 60 |
| Comparative Example 2 | $LiNi_{0.5}Co_{0.2}Mn_{0.3}O_2$, $LiCoO_2$ | EC : EMC = 1 : 2 | $1M - LiPF_6$ | Polyacrylonitrile | 1.0 | 60 | 800 | 180 |
| Comparative Example 3 | $LiNi_{0.5}Co_{0.2}Mn_{0.3}O_2$, $LiCoO_2$ | EC : EMC = 1 : 2 | $1M - LiPF_6$ | Polyacrylonitrile | 1.5 | 30 | 500 | 30 |
| Comparative Example 4 | $LiNi_{0.5}Co_{0.2}Mn_{0.3}O_2$, $LiCoO_2$ | EC : EMC = 1 : 2 | $1M - LiPF_6$ | Polyacrylonitrile | 5.0 | 30 | 500 | 30 |
| Comparative Example 5 | $LiNi_{0.5}Co_{0.2}Mn_{0.3}O_2$, $LiCoO_2$ | EC : EMC = 1 : 2 | $1M - LiTFSI$ | PVdF | 3.0 | 40 | 800 | 60 |
| Comparative Example 6 | $LiNi_{0.5}Co_{0.2}Mn_{0.3}O_2$, $LiCoO_2$ | EC : EMC = 1 : 2 | $1M - LiPF_6$ | Polyacrylonitrile | 5.0 | 60 | 800 | 180 |

EP 3 780 166 A1

(Evaluation method)

<Particle size distribution measurement through laser diffraction scattering>

For each of the positive electrodes included in the batteries of Examples 1 to 10 and Comparative Examples 1 to 6, a particle size distribution chart was obtained through the method described in the first embodiment. In addition, the peak A and the peak B were determined in each example based on the obtained size distribution chart, and the average size (D50) of the particles that constitute the positive electrode active-material containing layer was calculated. The results are indicated in Tables 3 and 4.

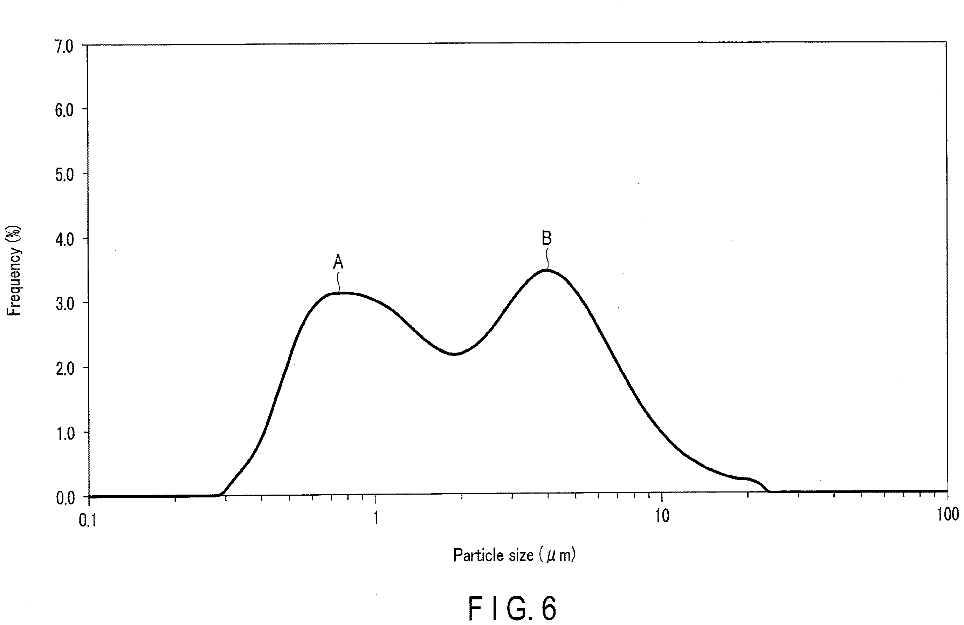

FIG. 6 is a particle size distribution chart for Example 1. In FIG. 6, the horizontal axis represents the particle size [$\mu$m] and the vertical axis represents the frequency [%]. The chart of FIG. 6 has a peak A and a peak B having different particle sizes corresponding to their peak tops. The particle size DA corresponding to the peak top of the peak A is 0.8 $\mu$m, while the particle size DB corresponding to the peak top of the peak B is 4.2 $\mu$m, which means that the particle size DA is smaller than the particle size DB. In addition, the frequency PA corresponding to the peak top of the peak A is 3.1%, while the frequency PB corresponding to the peak top of the peak B is 3.4%, which results in a ratio PA/PB of 0.9. In other words, the ratio PA/PB falls within the range of 0.2 or larger and 1.5 or smaller.

<Measurement of coating ratio of surface of active material particles with binder>

For the positive electrodes included in the batteries of Examples 1 to 10 and Comparative Examples 1 to 6, the coating ratio of the surface of the active material particles with the binder has been measured with the method described in the first embodiment. The results are shown in Tables 3 and 4.

<Evaluation of input/output characteristics>

The input/output performances of the nonaqueous electrolyte batteries of Examples 1 to 10 and Comparative Examples 1 to 6 were evaluated with the following method. Batteries in a state of charge of 100% (SOC 100%) were continuously discharged at current values of 1C and 10C under a temperature condition of 25 °C, and the 1C discharge capacity and 10 C discharge capacity were measured. The ratio C(10C)/C(1C) obtained by dividing the 10 C discharge capacity by the 1C discharge capacity was used as an indicator for evaluating the input/output performance. The results are listed in Tables 3 and 4.

<Evaluation of cycle life characteristics>

The nonaqueous electrolyte batteries of Examples 1 to 10 and Comparative Examples 1 to 6 were subjected to a cycle test under a temperature condition of 45 °C with the following method to evaluate their capacity retention rates and resistance increase rates. The results are listed in Tables 3 and 4.

In particular, each battery was discharged at 25 °C from indicating state of charge of 50% (SOC 50%) at current values of 1C and 10C, and the resistance value R1 (1 cyc) of the battery was calculated from the battery voltage 10 seconds after the discharging operation.

Next, with one cycle (2C/2C cycle) defined as the charging of the battery at a current value of 2C and discharging at a current value of 2C at 45 °C, the 2C/2C cycle test was repeated. In this cycle test, the number of cycles was counted, where the ratio (C(n)/C(1)) of the discharge capacity to the initial discharge capacity was maintained at 80% after the number (n) of cycles was conducted.

Furthermore, the resistance value R500 (500 cyc) was measured after the 500 cycles were conducted, in the same manner as in the measurement of the resistance value R1 (1 cyc) prior to the cycle test. The increase rate was calculated by dividing R500 by R1.

[Table 3]

| Table 3 | Particle size DA | Particle size DB | Frequency PA | Frequency PB | Ratio PA/PB | Average particle size (D50) of positive electrode particles (D50) | Active material surface coating ratio | Discharge capacity ratio C (10C)/C(1C) | 45 °C cycle capacity retention rate | 45 °C cycle resistance increase rate |
|---|---|---|---|---|---|---|---|---|---|---|
| Unit | μm | μm | % | % | - | μm | % | % | times | - |
| Example 1 | 0.80 | 4.20 | 3.10 | 3.43 | 0.90 | 2.00 | 99.5 | 88 | 3000 | 1.10 |
| Example 2 | 0.60 | 6.00 | 1.15 | 5.40 | 0.21 | 4.40 | 99 | 87 | 2900 | 1.15 |
| Example 3 | 1.00 | 6.50 | 2.13 | 4.22 | 0.50 | 5.00 | 99 | 88 | 3000 | 1.10 |
| Example 4 | 0.95 | 3.50 | 2.90 | 2.00 | 1.45 | 0.90 | 99 | 92 | 2800 | 1.20 |
| Example 5 | 1.20 | 6.80 | 1.30 | 5.10 | 0.25 | 5.70 | 99 | 87 | 2900 | 1.15 |
| Example 6 | 1.30 | 7.00 | 1.20 | 5.60 | 0.21 | 6.47 | 99 | 86 | 3000 | 1.10 |
| Example 7 | 0.80 | 4.20 | 3.10 | 3.43 | 0.90 | 2.00 | 99.5 | 89 | 2900 | 1.15 |
| Example 8 | 0.80 | 4.20 | 3.10 | 3.43 | 0.90 | 2.00 | 99.5 | 90 | 2850 | 1.15 |
| Example 9 | 0.70 | 3.50 | 3.00 | 3.00 | 1.00 | 1.64 | 99.5 | 90 | 2900 | 1.15 |
| Example 10 | 0.80 | 3.50 | 3.10 | 3.66 | 0.85 | 2.20 | 99.5 | 88 | 2900 | 1.05 |

[Table 4]

| Table 4 | Particle size DA | Particle size DB | Frequency PA | Frequency PB | Ratio PA/PB | Average particle size (D50) of positive electrode particles (D50) | Active material surface coating ratio | Discharge capacity ratio C (10C)/C(1C) | 45 °C cycle capacity retention rate | 45 °C cycle resistance increase rate |
|---|---|---|---|---|---|---|---|---|---|---|
| Unit | μm | μm | % | % | - | μm | % | % | times | - |
| Comparative Example 1 | 1.20 | 5.10 | 1.98 | 5.40 | 0.37 | 3.70 | 60 | 90 | 1500 | 1.45 |
| Comparative Example 2 | 0.89 | 3.00 | 8.55 | 1.50 | 5.70 | 0.90 | 90 | 88 | 1300 | 1.5 |
| Comparative Example 3 | 0.68 | 5.90 | 0.95 | 9.30 | 0.10 | 6.50 | 99 | 81 | 2900 | 1.15 |
| Comparative Example 4 | 0.68 | 5.90 | 0.95 | 9.30 | 0.10 | 6.50 | 99.9 | 75 | 2800 | 1.1 |
| Comparative Example 5 | 1.20 | 5.10 | 1.98 | 5.40 | 0.37 | 3.70 | 100 | 80 | 1500 | 1.2 |
| Comparative Example 6 | 0.89 | 3.00 | 8.55 | 1.50 | 5.70 | 0.90 | 99.9 | 79 | 1300 | 1.5 |

In Tables 3 and 4, the "particle size DA" and the "frequency PA" each indicate a value corresponding to the peak top of the peak A. The "particle size DB" and the "frequency PB" each indicate a value corresponding to the peak top of the peak B. The column of the "average particle size (D50) of positive electrode particles" indicates the average particle size (D50) of particles constituting the positive electrode active-material containing layer. This average particle size (D50) is a value calculated from the particle size distribution chart obtained through the particle size distribution measurement conducted on the positive electrode.

The column of the "active material surface coating ratio" shows the coating ratio of the surface of the active material particles with the binder, which has been measured through the above coating ratio measurement, on a percentage basis. The column of "discharge capacity ratio C (10C) /C (1C) " indicates the value of the ratio C(10C)/C(1C) obtained through the above input/output characteristic evaluation. The "45 °C cycle capacity retention rate" indicates the number of cycles measured at the cycle life characteristic evaluation. The "45 °C cycle resistance increase rate" indicates the ratio R500/R1, which is the ratio of the resistance value R500 (500 cyc) after 500 cycles to the resistance value R500 (R1) to the value of the ratio R1 (1 cyc) prior to the cycle test, where the values were measured in the cycle life characteristic evaluation.

As is apparent from Tables 3 and 4, the batteries of Examples 1 to 10 having a particle size DA that is smaller than a particle size DB and a ratio PA/PB of the frequency PA to the frequency PB in the range of 0.2 or more and 1.5 or less were excellent in both the input/output performance and cycle life characteristics in a well-balanced manner, as compared to the batteries of Comparative Examples 2 and 6 having a ratio PA/PB exceeding 1.5 and the batteries of Comparative Examples 3 and 4 having a ratio PA/PB smaller than 0.2.

As shown in Comparative Examples 1 and 5, even if the ratio PA/PB is in the range of 0.2 or more and 1.5 or less, a battery adopting PVdF as a binder was inferior in the input/output performance and/or cycle life characteristics.

Comparative Example 5 is an example of adopting PVdF for a binder and LiTFSI for an electrolyte salt. PVdF does not contain nitrogen atoms, while LiTFSI contains nitrogen atoms. In view of this, the active material can be considered as having its surface covered with a coating film derived from a decomposition product of the TFSI anions. Such a decomposition product is considered to contain nitrogen atoms. In this case, even if the ratio PA/PB is in the range of 0.2 or larger and 1.5 or smaller and even if the coating ratio of the surface of the active material with the binder is 100%, this comparative example shows poor input/output performance and cycle life characteristics in comparison with the examples. The binding property between the particles was also inferior to that of the examples.

Examples 1 to 3, 5, and 7 to 10 having an average particle size (D50) of the particles constituting the positive electrode active-material containing layer in the range of 1.5 $\mu$m or more and 6 $\mu$m or less exhibit excellent input/output performance and cycle life characteristics in a well-balanced manner as compared to Examples 4 and 6 having an average particle size (D50) not within the range of 1.5 $\mu$m or larger and 6 $\mu$m or smaller.

According to at least one embodiment and examples described above, an electrode is provided. The electrode includes an active-material containing layer that includes active material particles and a binder containing a polymer that contains monomers containing nitrogen atoms. The active material particles contain at least one selected from the group consisting of a lithium-containing nickel cobalt manganese composite oxide, a lithium-containing cobalt oxide, and a lithium-containing manganese oxide. The particle size distribution chart of the electrode obtained by the laser diffraction scattering has peak A and peak B whose particle sizes corresponding to their peak tops are different from each other. The particle size DA corresponding to the peak top of the peak A is smaller than the particle size DB corresponding to the peak top of the peak B. The ratio PA/PB of the frequency PA of the peak top of the peak A and the frequency PB of the peak top of the peak B falls within the range of 0.2 or larger and 1.5 or smaller.

Such an electrode can suppress both an increase in the initial resistance and an increase in the resistance during long-term use. The nonaqueous electrolyte battery having the electrodes according to the embodiment exhibits excellent input/output performance and cycle life characteristics.

While certain embodiments have been described, these embodiments have been presented by way of example only, and are not intended to limit the scope of the inventions. Indeed, the novel embodiments described herein may be embodied in a variety of other forms. Furthermore, various omissions, substitutions and modifications may be made without departing from the scope of the inventions. The accompanying claims and their equivalents are intended to cover such forms or modifications, and would fall within the scope of the inventions described in the claims or an equivalent scope.

**Claims**

1.    An electrode comprising an active-material containing layer comprising:

   active material particles; and
   a binder comprising a polymer that comprises a monomer comprising a nitrogen atom,

wherein
the active material particles comprise at least one selected from a group consisting of a lithium-containing nickel cobalt manganese composite oxide, a lithium-containing cobalt oxide, and a lithium-containing manganese oxide,
a particle size distribution chart of the electrode obtained by laser diffraction scattering comprises a peak A and a peak B whose particle sizes corresponding to peak tops of the peak A and the peak B are different from each other,
a particle size DA corresponding to the peak top of the peak A is smaller than a particle size DB corresponding to the peak top of the peak B, and
a ratio PA/PB of a frequency PA of the peak top of the peak A and a frequency PB of the peak top of the peak B is in a range of 0.2 or higher and 1.5 or lower.

2. The electrode according to claim 1, wherein
the binder covers surfaces of the active material particles, and
a coating ratio of the surfaces of the active material particles with the binder is 85% or higher and 99.9% or lower.

3. The electrode according to claim 1 or 2, wherein
the binder comprises, as the polymer, at least one selected from a group consisting of type A and type B,
the type A is a polymer or a copolymer comprising, as a monomer, at least one selected from acrylonitrile and methacrylonitrile, and
the type B is a polymer or a copolymer comprising, as a monomer, at least one selected from imide and amide.

4. The electrode according to any one of claims 1 to 3, wherein the electrode comprises 0.1 parts or more and 3 parts or less by mass of the binder with respect to 100 parts by mass of the active material particles.

5. The electrode according to any one of claims 1 to 4, wherein an average particle size (D50) in the particle size distribution chart is in a range of 1.5 $\mu$m or larger and 6 $\mu$m or smaller.

6. A nonaqueous electrolyte battery comprising:

   a positive electrode as the electrode according to any one of claims 1 to 5;
   a negative electrode comprising a negative electrode active material; and
   a nonaqueous electrolyte.

7. A battery pack comprising the nonaqueous electrolyte battery according to claim 6.

F I G. 1

F I G. 2

F I G. 3

FIG. 4

FIG. 5

FIG. 6

## INTERNATIONAL SEARCH REPORT

| | International application No. |
|---|---|
| | PCT/JP2018/014146 |

**A. CLASSIFICATION OF SUBJECT MATTER**
Int.Cl. H01M4/131(2010.01)i, H01M4/505(2010.01)i, H01M4/525(2010.01)i, H01M4/62(2006.01)i

According to International Patent Classification (IPC) or to both national classification and IPC

**B. FIELDS SEARCHED**

Minimum documentation searched (classification system followed by classification symbols)
Int.Cl. H01M4/131, H01M4/505, H01M4/525, H01M4/62

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-149189 A (HITACHI CHEMICAL COMPANY, LTD.) 18 August 2016, example 3 (Family: none) | 1–7 |
| A | JP 2000-21407 A (TOSHIBA CORPORATION) 21 January 2000, example 1 (Family: none) | 1–7 |
| A | JP 11-283628 A (FUJI PHOTO FILM CO., LTD.; FUJI FILM CELLTEC KK) 15 October 1999, example -1 (Family: none) | 1–7 |

☒ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21.06.2018 | 03.07.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT

| | International application No. |
|---|---|
| | PCT/JP2018/014146 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 5-326021 A (YUASA CORPORATION) 10 December 1993, example 1 (Family: none) | 1-7 |
| A | JP 2008-10394 A (TOSHIBA CORPORATION) 17 January 2008, claims & US 2007/0281214 A1, claims | 1-7 |

Form PCT/ISA/210 (continuation of second sheet) (January 2015)

**EP 3 780 166 A1**

**Patent documents cited in the description**

- JP 6003889 B
- JP 6083609 B
- JP 2012164624 A